# EUROPÄISCHE PATENTSCHRIFT

(11) **EP 1 734 810 B1**
(45) Veröffentlichungstag und Bekanntmachung des Hinweises auf die Patenterteilung: **20.01.2010**
(21) Anmeldenummer: 05715635.8
(22) Anmeldetag: 01.03.2005
(51) Int. Cl.: A01K 5/01

(54) **Gefäß zur Darreichung von Nahrung mit auswechselbarem Einsatzteil**
Receptacle for dispensing food with removable insert
Récipient pour distribuer de la nourriture doté d'un insert interchangeable

(30) Priorität: 17.03.2004 DE 202004004214 U
(43) Veröffentlichungstag der Anmeldung: 27.12.2006
(73) Patentinhaber: Holz, Helmuth, 76189 Karlsruhe (DE)
(72) Erfinder: Holz, Helmuth, 76189 Karlsruhe (DE)
(74) Vertreter: Durm, Frank
(86) Internationale Anmeldenummer: PCT/EP2005/002145
(87) Internationale Veröffentlichungsnummer: WO 2005/092086

(56) Entgegenhaltungen:
- EP-A- 1 085 803
- WO-A-99/11541
- DE-U1- 20 116 085
- GB-A- 2 304 273

## Beschreibung

Die Erfindung betrifft ein Gefäß zur Darreichung von Nahrung, insbesondere von Futter für Haustiere, umfassend ein Basisteil mit umlaufendem Rand und mit als Schlitze ausgebildeten Ausnehmungen sowie ein auswechselbares Einsatzteil mit einem Boden und einer Wandung, in der nach außen weisende Sicken ausgebildet sind, welche in die Ausnehmungen des Basisteils eingreifen.

Neben einteiligen Gefäßen zur Aufnahme bzw. Darreichung von Tierfutter, die aus einem Bodenteil und einem Rand bestehen, welche eine Mulde bilden, sind auch mehrteilige Aufnahmevorrichtungen für Tierfutter bekannt. Einteilige Futternäpfe haben den Nachteil, dass sich angetrocknete Futterreste nur sehr schwierig beseitigen lassen. Bei den bekannten mehrteiligen Futternäpfen lässt sich ein Einsatz, der die Nahrung aufnimmt, herausnehmen. Entweder wird der Einsatz dann später separat gereinigt oder, bei der Verwendung von Einwegeinsätzen, nach Gebrauch beseitigt.

Aus der DE 201 16 085 U1 ist eine mehrteilige Vorrichtung zur Aufnahme von Tierfutter bekannt, welche aus einem Basisteil und einem auswechselbaren, dünnwandigen Einsatz besteht. In der Wandung des Einsatzteils sind radial nach außen weisende Sicken ausgebildet und im Rand des Basisteils sind Ausnehmungen vorgesehen, in welche die Sicken des Einsatzteils eingreifen. Die nach außen weisenden Sicken des Einsatzteils bilden ein einfach zu handhabendes Mittel zur Befestigung des Einsatzes im Basisteil. Beim Einlegen des Einsatzteils in das Basisteil greifen die Sicken in die dafür vorgesehenen Ausnehmungen im Basisteil ein, ohne dass das Einsatzteil verformt wird. Das Eingreifen der Sicken in die passenden Ausnehmungen des Basisteils gewährleistet eine sichere Befestigung, die ein Verdrehen oder Verrutschen des Einsatzteils nach oben oder zur Seite zuverlässig verhindert.

Bei dem bekannten Gefäß ist das Einsatzteil becherartig ausgebildet. Eine solche Ausgestaltung hat aber den Nachteil, dass das Einsatzteil aufwendig und damit teuer hergestellt werden muss, z. B. durch Spritzgießen oder Tiefziehen. Weiterhin benötigt das becherartige Einsatzteil aufgrund seiner dreidimensionalen Form auch bei der Lagerung oder beim Transport einen relativ großen Platzbedarf und ist damit sperrig bezüglich Handhabung und Aufbewahrung. Die Herstellung eines runden Tiefziehteils ist relativ teuer.

Die Aufgabe besteht also darin, ein Gefäß zur Darreichung von Nahrung mit auswechselbarem Einsatzteil anzugeben, welches nicht nur leicht und kostengünstig hergestellt werden kann, sondern welches auch bei der Lagerung und beim Transport nur sehr geringen Platz beansprucht und überdies schnell und einfach in das Basisteil eingesetzt werden kann.

Ausgehend von einem Gefäß der eingangs erwähnten Art wird die Aufgabe mit den im ersten Patentanspruch angegebenen Mitteln gelöst.

Durch die erfindungsgemäße Ausgestaltung wird ein Gefäß zur Darreichung von Nahrung geschaffen, bei welchem das Einsatzteil nicht nur kostengünstig hergestellt, sondern auch in großer Stückzahl platzsparend gelagert und transportiert werden kann. Die einzelnen Einsatzteile brauchen nicht, wie beim Stand der Technik, durch einen aufwendigen Tiefzieh- oder Spritzgießvorgang hergestellt zu werden, sondern können in einfacher Weise durch Einprägen oder Einstanzen von Faltlinien in ein ebenes Blatt erzeugt werden, entlang derer später das Einsatzteil zu seiner dreidimensionalen Gebrauchsform gefaltet wird. Dieses Einprägen geht nicht nur erheblich schneller als ein Tiefziehen oder Spritzgießen, sondern ist auch wesentlich billiger, da der maschinelle Aufwand bei der Herstellung der Einsatzteile deutlich verringert werden kann. Da die Einsatzteile als Stapel, bei dem mehrere Einsatzteile übereinander liegen, oder als Rolle, bei der mehrere Einsatzteile wie bei einer Haushaltsrolle abreißbar hintereinander hängen, transportiert werden bzw. in den Handel kommen können und erst beim Endverbraucher zu einer dreidimensionalen Raumform umgestaltet werden, ist auch die Lagerung bzw. der Transport der Einsatzteile gegenüber den Einsatzteilen nach dem Stand der Technik außerordentlich platzsparend möglich. Die erfindungsgemäße Anordnung der Faltlinien so, dass sich beim Auffalten vier V-förmige Sicken bilden, erlaubt ein schnelles und einfaches Einsetzen in das entsprechend gestaltete Basisteil.

Die Ausnehmungen im Basisteil sind als lange schmale Schlitze ausgebildet, die nach oben hin offen sind. Schlitze können besonders einfach und preiswert durch Sägen oder Fräsen in den Rand des Basisteils eingebracht werden. Durch die nach oben offenen Schlitze gleiten die Sicken beim Einlegen des Einsatzteils in das Basisteil automatisch in die Schlitze hinein, ohne dass zusätzliche Handgriffe des Benutzers notwendig werden. Das Einsatzteil ist mit einem Griff einsetzbar und auch wieder herausnehmbar. Damit ist das Auswechseln des Einsatzteils für den Benutzer besonders bequem und leichtgängig.

Die V-Form der Sicken gewährleistet, dass sie in die Ausnehmungen im Basisteil von oben hineinrutschen können, bis das Einsatzteil im Basisteil einen sicheren Halt findet. Durch die V-förmige Form der Sicken lassen sich diese elastisch zusammendrücken, was das Einbringen in die Ausnehmungen erleichtert.

Die Sicken greifen vorteilhafterweise klemmend in die Ausnehmungen des Basisteils ein. Unterstützt durch die V-Form, die ein zeitweises Zusammendrücken und anschließendes Zurückfedern der Sicken in die ursprüngliche Form ermöglicht, klemmen sich die Sicken in den Ausnehmungen selbsttätig fest. Mit dem Einklemmen der Sicken wird gewährleistet, dass das Einsatzteil zuverlässig im Basisteil verbleibt.

Das Einsatzteil und das Basisteil haben rechteckige, vorzugsweise quadratische Grundform. Dies gewährleistet einen guten Halt des Einsatzteils im Basisteil. Auch bei starker Beanspruchung, z. B. durch große Tiere, die mit ihrer Zunge beim Fressen starken Druck auf das Einsatzteil ausüben, verharrt das Einsatzteil in seiner Position, ohne zu verrutschen oder zu verdrehen. Die Verwendung von vier Sicken erweist sich in der praktischen Anwendung als besonders optimal, weil einerseits bei nur einer oder zwei Sicken das Einsatzteil bei starker Beanspruchung verrutschen oder sich verdrehen könnte und andererseits bei mehr als vier Sicken der Benutzer darauf achten muss, dass alle Sicken gleichzeitig in die korrespondierenden Ausnehmungen eingreifen, damit das Einsatzteil nicht beschädigt wird.

Außerhalb der Sicken am oberen Ende der Wandung des Einsatzteils angesetzte, nach außen weisende Stege erweisen sich als besonders vorteilhaft, da diese Stege den korrespondierenden umlaufenden Randsteg des Basisteils überlappen und damit das Basisteil vollständig vor Verschmutzung schützen. Der Anwender kann das Einsatzteil am Steg untergreifen und es bequem und komfortabel wieder aus dem Basisteil entnehmen.

Als vorteilhaft erweisen sich Einsatzteile aus kompostierbarem Material. Die gebrauchten Einsatzteile werden dann dem Kompost zugeführt und verrotten dort; es entsteht kein Abfall. Vorzugsweise finden Naturstoffe Anwendung, wie z. B. Stärke, Papier oder Zellulose. Einsatzteile aus diesen Materialien sind außerdem in der Produktion besonders preiswert und auch für Lebensmittel geeignet, so dass sie keine Gefahr für die Tiere darstellen. Als Papier eignet sich z. B. gebleichtes oder ungebleichtes Papier mit einem Gewicht zwischen 40 und 100 g/m2.

Besonders vorteilhaft erweisen sich Einsatzteile aus Papier, das mit Wachs beschichtet ist. Dies verhindert, dass Wasser oder Fett das Papier durchfeuchten oder gar zersetzen kann.

Das Einsatzteil ist nach einer vorteilhaften Ausgestaltung durch ein Flach-Stanz-Pressverfahren oder ein Rollen-Schneid-Prägeverfahren hergestellt. Beide Verfahren sind einfach, schnell und kostengünstig auszuführen und erleichtern somit die Herstellung des Einsatzteils. Beim Flach-Stanz-Pressverfahren wird das Rohmaterial flach liegend bearbeitet, während es beim Rollen-Schneid-Prägeverfahren durch zwei oder mehrere Walzen hindurch geführt und dabei bearbeitet wird. Bei der Bearbeitung wird das Rohmaterial entlang der späteren Faltlinien durch eine Pressung vorgeprägt. Diese Pressungen erfolgen gegenüber der späteren Faltseite. Sie bleiben auch während einer Stapelung in einer Endverpackung oder beim Aufwickeln auf eine Rolle erhalten und geben somit die spätere Form des Einsatzteils vor.

Ein Ausführungsbeispiel der Erfindung wird nachstehend anhand der beigefügten Zeichnungen näher beschrieben. Es zeigen:
- Figur 1: ein Gefäß zur Darreichung von Nahrung, umfassend ein Basisteil und ein Einsatzteil, in perspektivischer Ansicht;
- Figur 2: das Einsatzteil im ungefalteten Zustand; und
- Figur 3: das Einsatzteil während des Faltvorganges.

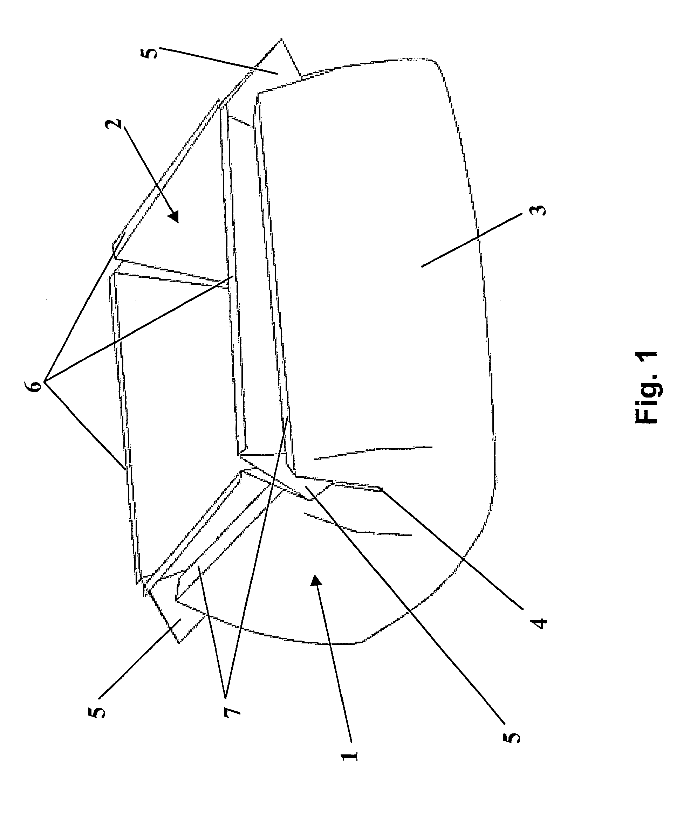

Gemäß Figur 1 umfasst das Gefäß ein Basisteil 1 und ein Einsatzteil 2, das in der Darstellung etwas aus dem Basisteil 1 nach oben hin herausragt. Sowohl das Basisteil 1 als auch das Einsatzteil 2 weisen im gezeigten Ausführungsbeispiel eine quadratische Grundform auf; sie können jedoch auch als ein beliebiges Vieleck, vorzugsweise regelmäßiges Vieleck, ausgebildet sein, wie z. B. als Dreieck, Rechteck, Sechseck oder Achteck.

Ein umlaufender Rand 3 des Basisteils 1 weist insgesamt vier Ausnehmungen 4 auf, die sich jeweils in den Ecken des Quadrats befinden. Die Ausnehmungen 4 sind als lange schmale Schlitze ausgebildet, die den Rand 3 einschneiden und damit nach oben hin offen sind. Die Ausnehmungen 4 dienen zur Aufnahme V-förmiger Sicken 5 des Einsatzteils 2.

Das Einsatzteil 2 weist entsprechend den vier Ecken des Basisteils 1 vier Sicken 5 auf, die in die korrespondierenden Ausnehmungen 4 hineinragen. In Figur 1 ist deutlich der Vorteil der nach außen weisenden Sicken 5 des Einsatzteils 2 zu erkennen: Beim Einlegen des Einsatzteils 2 in das Basisteil 1 rutschen die Sicken 5 von oben in die Ausnehmungen 4 hinein und klemmen sich dort fast von selbst fest. Dies verhindert zuverlässig ein Verdrehen oder Verrutschen des Einsatzteils 2 im Basisteil 1.

Am oberen Rand der Wandung des Einsatzteils 2 ist außerhalb der Sicken 5 ein nach außen gerichteter umlaufender Steg 6 angesetzt, der nur durch die Sicken 5 unterbrochen wird. Der Steg 6 weist die gleiche Tiefe wie ein Randsteg 7 des Basisteils 1 auf, den er vollständig abdeckt, sobald das Einsatzteil 2 im Basisteil 1 positioniert ist. Damit wird eine Verschmutzung des Randstegs 7 des Basisteils 1 vermieden. Zusätzlich kann der Benutzer das Einsatzteil 2 am Steg 6 untergreifen und bequem und komfortabel nach oben aus dem Basisteil 1 entnehmen.

Das Einsatzteil 2 besteht aus einem kompostierbaren Material, nämlich Papier, und ist auf einer Seite mit einer wasser- und fettundurchlässigen Beschichtung oder Kaschierung, z. B. aus Wachs oder einer PE-Folie, versehen. Das Einsatzteil 2 weist einen Boden 8 und eine umlaufende Wandung 9 auf, in welcher die V-förmigen Sicken 5 ausgebildet sind.

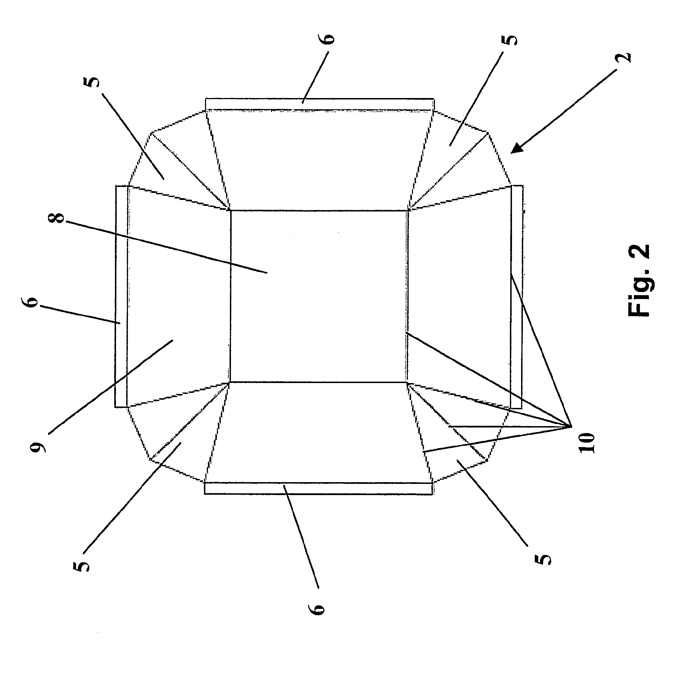

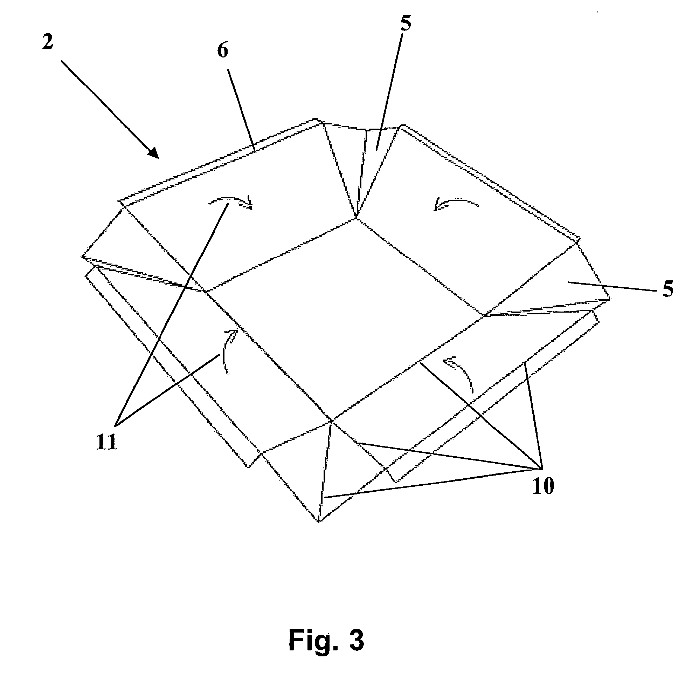

Figur 2 zeigt das Einsatzteil 2 in seiner Grundform, in der es noch die Form eines ebenen Blattes aufweist. In das Einsatzteil 2 sind durch ein Flach-Stanz-Pressverfahren oder ein Rollen-Schneid-Prägeverfahren Pressungen eingebracht, die Faltlinien 10 definieren. Die Faltlinien 10 sind so auf dem ebenen Blatt verteilt, dass das Blatt entlang dieser Faltlinien 10 unter Bildung der V-förmigen Sicken 5 zu einer dem Basisteil 1 angepassten Form gefaltet werden kann. Bei dem Faltvorgang wird das in Figur 2 in seiner Grundform dargestellte Einsatzteil 2 wie durch die Pfeile 11 in Figur 3 gezeigt zusammengefaltet, um das gebrauchsfertige Einsatzteil 2 gemäß Figur 1 zu bilden. Bei dem Faltvorgang werden die in der Wandung 9 des Einsatzteils 2 ausgeformten Sicken 5 erzeugt, die sich V-förmig nach unten hin verjüngen und in ihrer Anzahl der Anzahl der Ecken des Quadrats bzw. - bei einem Vieleck - der Anzahl der Ecken des Vielecks entsprechen. Außerdem können durch einfache weitere Faltungen die Stege 6 am oberen Rand der Wandung 9 erzeugt werden.

Das Einsatzteil 2 kann aufgrund seiner erfindungsgemäßen Ausgestaltung als im Wesentlichen ebenes Blatt hergestellt, gelagert und/oder transportiert werden und erhält erst unmittelbar vor seiner Verwendung durch den Endverbraucher seine dreidimensionale Raumform, indem es entlang der Faltlinien 10 in seine endgültige Form gefaltet wird.

### Zusammenstellung der Bezugszeichen

- 1: Basisteil
- 2: Einsatzteil
- 3: Rand
- 4: Ausnehmung
- 5: Sicke
- 6: Steg
- 7: Randsteg
- 8: Boden
- 9: Wandung
- 10: Faltlinien
- 11: Pfeile

## Patentansprüche

1. Gefäß zur Darreichung von Nahrung, insbesondere von Futter für Haustiere, umfassend
- ein Basisteil (1) mit einem umlaufenden Rand (3) und Ausnehmungen (4), die als lange schmale Schlitze ausgebildet sind, welche in den Rand (3) einschneiden und nach oben hin offen sind;
- ein auswechselbares Einsatzteil (2) mit einem Boden (8) und einer Wandung (9), in der nach außen weisende, V-förmige Sicken (5) ausgebildet sind, welche in die Ausnehmungen (4) des Basisteils (1) eingreifen;
**dadurch gekennzeichnet, dass**
- das Basisteil (1) und das Einsatzteil (2) eine rechteckige Grundform aufweisen;
- in den Ecken des Basisteils (1) jeweils eine Ausnehmung (4) angeordnet ist;
- das Einsatzteil (2) aus einem ebenen Blatt Papier besteht, in das Faltlinien (10) eingestanzt oder eingeprägt sind, wobei diese Faltlinien (10) so auf dem ebenen Blatt verteilt sind, dass das Blatt entlang dieser Faltlinien (10) unter Bildung der V-förmigen Sicken (5) aus der Ebene zu einer dem Basisteil (1) angepassten dreidimensionalen Raumform faltbar ist.

2. Gefäß nach Anspruch 1, **dadurch gekennzeichnet, dass** das Basisteil (1) und das Einsatzteil (2) jeweils quadratische Grundform aufweisen.

3. Gefäß nach Anspruch 1 und 2, **dadurch gekennzeichnet, dass** die Sicken (5) des Einsatzteils (2) klemmend in die Ausnehmungen (4) des Basisteils (1) eingreifen.

4. Gefäß nach einem der Ansprüche 1 bis 3, **dadurch gekennzeichnet, dass**
- das Basisteil 1 einen umlaufenden Randsteg (7) aufweist, der nur durch die Ausnehmungen (4) unterbrochen ist;
- das Einsatzteil (2) am oberen Rand der Wandung (9) außerhalb der Sicken (5) nach außen gerichtete Stege (6) aufweist, welche den Randsteg (7) des Basisteils (1) abdecken.

5. Gefäß nach einem der Ansprüche 1 bis 4, **dadurch gekennzeichnet, dass** das Einsatzteil (2) aus Papier besteht, das mit einer wasser- und fettundurchlässigen Beschichtung oder Kaschierung versehen ist.

6. Gefäß nach Anspruch 5, **dadurch gekennzeichnet, dass** das Einsatzteil (2) aus mit Wachs beschichtetem Papier besteht.

7. Gefäß nach einem der Ansprüche 1 bis 6, **dadurch gekennzeichnet, dass** das Einsatzteil (2) durch ein Flach-Stanz-Verfahren oder ein Rollen-Schneid-Prägeverfahren hergestellt ist.

## Claims

1. Receptacle for dispensing food, in particular food for domestic animals, comprising
- a base part (1) comprising a peripheral edge (3) and recesses (4), which are formed as long, narrow slots which intersect with the edge (3) and are open upwards;
- a replaceable insert (2) comprising a bottom (8) and a wall (9) in which outwardly facing V-shaped pleats (5) are formed which are inserted into the recesses (4) of the base part (1);
**characterised in that**
- the base part (1) and the insert (2) have a rectangular basic shape;
- one recess (4) is arranged in each case in the corners of the base part (1);
- the insert (2) consists of a planar sheet of paper, into which fold lines (10) are stamped or embossed, said fold lines (10) being distributed on the planar sheet such that the sheet may be folded along said fold lines (10), forming the V-shaped pleats (5) from the flat surface to form a three-dimensional shape adapted to the base part (1).

2. Receptacle according to Claim 1, **characterised in that** the base part (1) and the insert (2) respectively have a square basic shape.

3. Receptacle according to Claim 1 and 2, **characterised in that** the pleats (5) of the insert (2) are inserted in a clamped manner in the recesses (4) of the base part (1).

4. Receptacle according to one of Claims 1 to 3,
**characterised in that**
- the base part 1 comprises a peripheral edge web (7) which is only interrupted by the recesses (4);
- the insert (2) comprises outwardly oriented webs (6) on the upper edge of the wall (9) beyond the pleats (5), which cover the edge web (7) of the base part (1).

5. Receptacle according to one of Claims 1 to 4,
**characterised in that** the insert (2) consists of paper which is provided with a coating or lamination which is impermeable to water and fat.

6. Receptacle according to Claim 5, **characterised in that** the insert (2) consists of paper coated with wax.

7. Receptacle according to one of Claims 1 to 6,
**characterised in that** the insert (2) is produced by a flat cutting process or a rolling-cutting-stamping process.

## Revendications

1. Récipient pour la présentation de nourriture, en particulier de la nourriture pour animaux domestiques, comprenant :
- une pièce de base (1) avec un bord périphérique (3) et des évidements (4) formés comme de longues fentes étroites, coupant le bord (3) et ouverts vers le haut ;
- une pièce d'insertion (2) interchangeable, avec un fond (8) et une paroi (9), dans laquelle des sont formées des rainures en forme de V (5), orientées vers l'extérieur, qui s'engagent dans les évidements (4) de la pièce de base (1) ;
**caractérisé en ce que**
- la pièce de base (1) et la pièce d'insertion (2) présentent une forme de base rectangulaire ;
- un évidement (4) est respectivement prévu dans chaque coin de la pièce de base (1) ;
- la pièce d'insertion (2) est constituée d'une feuille de papier plane, dans laquelle sont découpées ou estampées des lignes de pliage (10), ces lignes de pliage (10) étant réparties de telle manière sur la feuille plane, que la feuille peut être pliée le long de ces lignes de pliage (10), en transformant les rainures en forme de V (5) du plan en une forme tridimensionnelle, adaptée à la pièce de base (1).

2. Récipient selon la revendication 1, **caractérisé en ce que** la pièce de base (1) et la pièce d'insertion (2) présentent chacune une forme de base carrée.

3. Récipient selon l'une des revendications 1 ou 2,
**caractérisé en ce que** les rainures (5) de la pièce d'insertion (2) s'engagent par serrage dans les évidements (4) de la pièce de base (1).

4. Récipient selon l'une des revendications 1 à 3,
**caractérisé en ce que**
- la pièce de base (1) comporte une nervure de bord périphérique (7), qui est interrompue seulement par les évidements (4) ;
- la pièce d'insertion (2) comporte des nervures (6) orientées vers l'extérieur, situées sur le bord supérieur de la paroi (9), à l'extérieur des rainures (5), et recouvrant la nervure de bord (7) de la pièce de base (1).

5. Récipient selon l'une des revendications 1 à 4,
**caractérisé en ce que** la pièce d'insertion (2) est constituée de papier pourvu d'un revêtement ou d'une couche imperméable à l'eau et à la graisse.

6. Récipient selon la revendication 5, **caractérisé en ce que** la pièce d'insertion (2) est constituée d'un papier revêtu de cire.

7. Récipient selon l'une des revendications 1 à 6,
**caractérisé en ce que** la pièce d'insertion (2) est réalisée par un procédé de découpage à plat ou par un procédé de découpage par estampage.
